# EUROPEAN PATENT SPECIFICATION

(11) **EP 4 586 069 B1**
(45) Date of publication and mention of the grant of the patent: **15.07.2026**
(21) Application number: 24151147.6
(22) Date of filing: 10.01.2024
(51) Int. Cl.: G06F 3/12, H04L 67/10, H04L 67/02

(54) **A METHOD FOR A PRINT FLEET SYSTEM**
VERFAHREN FÜR EIN DRUCKFLOTTENSYSTEM
PROCÉDÉ POUR SYSTÈME DE PARC D'IMPRESSION

(43) Date of publication of application: 16.07.2025
(73) Proprietor: Canon Production Printing Holding B.V., 5914 HH Venlo (NL)
(72) Inventor: TODORAN, Loredana M., Venlo (NL); LIU, Shutong, Venlo (NL); DEHING, Martijn J. L., Venlo (NL)
(74) Representative: Canon Production Printing IP Department

(56) References cited:
- US-A1- 2002 196 460
- US-A1- 2003 149 917
- US-A1- 2016 124 686

## Description

### BACKGROUND OF THE INVENTION

### Field of the invention

The invention relates to a method of remotely using a remote print manager module which is installed on each printer of a cluster of printers and is configured to display printer data and job data of each printer in the cluster in a window of a web browser, the method comprising the computer-implemented steps of selecting a first printer in the cluster by means of the web browser and connecting to the remote print manager module of the first printer in the cluster.

Hereinafter the remote print manager module may also be referred to as "Remote Manager" or "Remote Manager application".

Hereinafter a new version and an old version of software correspond to a high version and a low version of the software respectively.

Hereinafter a newer version and an older version of software correspond to a higher version and a lower version of the software respectively.

Hereinafter a user may also be called an operator and vice versa.

### Description of the background art

A print fleet system comprises a plurality of printers. A display of an overview of print job queues of the plurality of printers in the print fleet system is known from US patent 10509604. The print fleet system may comprises one or more clusters of printers. Each printer in a cluster is server-driven and digitally connected via a network, wired or wireless.

Each printer in a cluster has installed a remote print manager module which comprises a multi-printer scheduler and remote management console to control the server-driven printer. The remote print manager module is a web-based tool which helps central operators to manage their print production and provide insight into the production schedules. The remote print manager enables to upload jobs, to edit job properties and to change the print queues from a remote location or workstation. Jobs can easily be rescheduled, re-located or changed before being printed.

The operator that uses the remote manager for schedule, upload and adjust the key aspects of jobs and manage queues across one or more different server-driven colour and monochrome printers at the same time. The operator is able to add in the cluster as many printers as he wants. Each printer from the cluster can have a different software version of the remote manager that is bound to the server software version of each controller of the printer. An incrementally release may improve the remote manager software on a regular time basis.

The printers that are available in the remote print manager module are part of a printer cluster. Within the print environment there can be several printer clusters. A printer can only be part of one printer cluster. The cluster printers share a cluster key to secure the access to the printers via the remote print manager module. A settings editor of each cluster printer shows the printers of the corresponding printer cluster. Only when a cluster printer shares the cluster key, it can connect to the remote print manager module.

For a cluster of printers managed by the remote manager application that is linked to one of said printers, the availability of management features and capabilities is bound to the version of the used remote manager software, for example the version of the remote manager software of the first printer mentioned here-above. Said functionality can be improved or obsolete because another, newer or more preferable version linked to another printer in the cluster is available. A problem arises for example when an operator is using the remote manager to see the schedule per connected printer. He is not able to approximate how much time will pass until next intervention is needed and sometimes he misses the moment and printer suddenly stops printing. The operator is not aware that a newer software version of the remote manager has a visual feedback that shows the time in minutes and seconds. The user needs to inspect manually one by one each printer in the cluster to see the installed version. After the inspection, user could decide which printer to use for getting the needed functionalities.

Patent application US 2003/149917 described a method of revising multi-component software in a multifunctional printer, including revising at least one software component of the multi-component software, qualifying the multi-component software, bundling the multi-component software as a software bundle; and loading the software bundle on to a multifunctional printer.

It is an objective of the invention to provide a method that helps an operator or user to use the full functionality of the available remote manager software in the cluster in an efficient way.

### SUMMARY OF THE INVENTION

For this purpose, the method described here-above comprises the computer-implemented steps of detecting a remote print manager module of a second printer in the cluster which module has a higher software version than the remote print manager module of the first printer, and
disconnecting from the remote print manager module of the first printer, selecting the second printer in the cluster by means of the web browser, and connecting to the remote print manager module of the second printer.

By doing so, the user is able to know if other software versions of the remote manager are deployed in the cluster of printers and is able to switch to said versions.

According to an embodiment the step of detecting the second printer is performed by the remote print manager module of the first printer. Detecting a remote print manager module of the second printer in the cluster which module has a higher software version than the remote print manager module of the first printer is performed by the remote print manager module of the first printer by the following steps: in a first step the remote manager module of the first printer gets also the version of printers in the cluster. In a second step the remote manager loops through all the versions until the remote manager finds a higher version. When a higher version is found, the remote manager looks up in a third step a name of the printer. In a fourth step the remote manager sends a signal that a higher version is found to the user interface screen of the remote manager module of the first printer.

According to an alternative embodiment the step of detecting the second printer is performed by the web browser. The web browser may send an Internet Control Message Protocol (ICMP) Echo Request, also known as a ping command, to a specified interface on the network and waiting for a reply. When a ping command is issued, a ping signal is sent to a specified address, in this case the IP address of all printers in the cluster. When a printer in the cluster receives the echo request, it responds by sending an echo reply packet. The echo reply packet may comprise the software version number of the remote manager which is installed on the printer which has received the echo request.

The step to query the network for printers in the cluster can alternatively be towards a third party presence service (i.e. in the cloud or on premises) where printers register and can be queried for discovery. There are many ways printer devices can be discovered or signal their presence so the term detecting the second printer shall be understood broad.

According to an embodiment the method comprises the step of the remote print manager module of the first printer giving visual feedback on the window of the web browser to confirm the selection of the second printer. The visual feedback may be a user message, an alert or any other visual feedback.

According to an embodiment the printer data and job data comprise a multi-printer schedule of print jobs of the printers in the cluster.

The present invention also relates to a print fleet system comprising a cluster of printers, each printer in the cluster comprising a remote print manager configured to display printer data and job data of each printer in the cluster of printers in a window of a web browser, wherein each printer in the cluster is configured to perform the computer-implemented steps of the method according to the present invention.

The present invention also relates to a recording medium comprising computer executable program code configured to instruct a computer connected to a print fleet system according to the present invention to perform the computer-implemented steps of the method according to the present invention.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description.

### BRIEF DESCRIPTION OF THE DRAWINGS

The invention will now be explained further with reference to the drawings indicated below.
Fig. 1 shows the general arrangement of the print fleet system comprising the plurality of printers according to the invention.
Fig. 2 is a schematic diagram of the control unit of a printer in a cluster according to the present invention.
Fig. 3 - 5 show windows on a user interface screen according to the method of the present invention.
Fig. 6 shows a flow diagram of the method according to the invention.
Fig. 7 is a diagram of a software product according to the present invention.

### DETAILED DESCRIPTION OF THE PREFERRED EMBODIMENTS

The present invention will now be described with reference to the accompanying drawings, wherein the same or similar elements are identified with the same reference numerals throughout the several views.

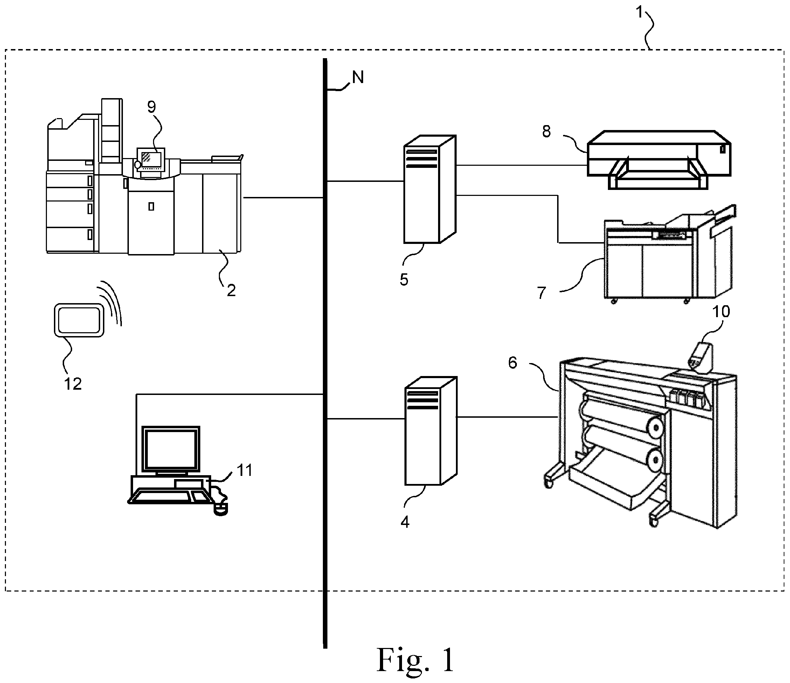

Fig. 1 shows a general arrangement of a print fleet system 1 according to the invention. This print fleet system 1 comprises a plurality of printers 2, 6, 7, 8 connected to a network N. The printers 7, 8 are connected to the network N via a server 5. The server 5 may act as a control unit for the printers 7, 8. The printer 6 is connected to the network N via a server 4. The server 4 may act as a control unit for the printer 6. A work station 11 may also be connected to the network N. The work station 11 may act as a control unit for any of the printers 2, 6, 7, 8 of the print fleet system 1. A mobile device 12 may be wireless connected to the network N. The screen of the mobile device 12 may act as a user interface screen of the print fleet system 1. Printer 2 is provided with local user interface screen LUI 9. The printer 6 is provided with a local user interface screen LUI 10. The local user interface screens LUI 9, 10 may act as a user interface screen for the method according to the invention. A control unit of one of the printers 2, 6, 7, 8 may act as a central and data gathering control unit for performing the steps of the method according to the invention. However, a control unit for controlling the method according to the invention separate from the printers 2, 6, 7, 8 but connected to the network N, like the work station 11 may be envisioned. The work station may also be a remote device which is connected to the network N via the internet or intranet. Print jobs submitted to any one of the printers 2, 6, 7, 8 arrive in a corresponding print job queue. The print job queues may be gathered via the network N to a gathering control unit in the print fleet system 1. The data gathering control unit may be one of the control units of the printers 2, 6, 7, 8 or a separate control unit like work station 11.

The data gathering control unit receives the print job queues from each printer in the print fleet system 1. The data gathering control unit is also configured to control display of the print job queues of the print fleet system 1 on a user interface screen like the LUI's 9, 10a, on the screen of the work station 11 or on the screen of the mobile remote device 12.

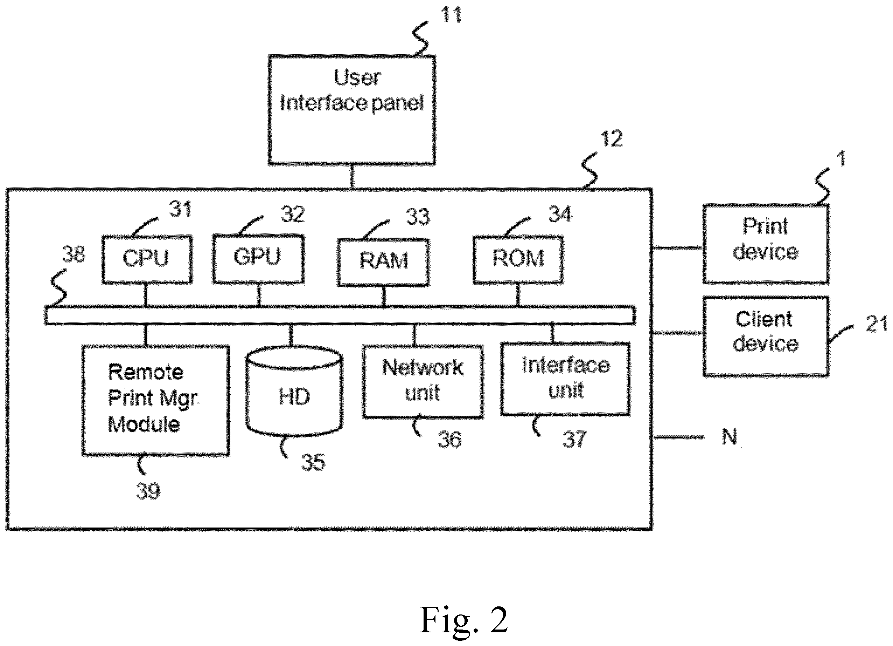

Fig. 2 is presenting an embodiment of the control unit 12 in more detail. As shown in Fig. 2, the control unit 12 comprises a Central Processing Unit (CPU) 31, a Graphical Processor Unit (GPU) 32, a Random Access Memory (RAM) 33, a Read Only Memory (ROM) 34, a network unit 36, an interface unit 37, a hard disk (HD) 35 and the remote print manager module 39 according to the present invention. The aforementioned units 31 - 39 are interconnected through a bus system 38. However, the control unit 12 may also be a distributed control unit.

The CPU 31 controls the printing system 1 in accordance with control programs stored in the ROM 34 or on the HD 35 and the local user interface panel 11. The CPU 31 also controls the image processing unit 39 and the GPU 32. The ROM 34 stores programs and data such as boot program, set-up program, various set-up data or the like, which are to be read out and executed by the CPU 31. The hard disk 35 is an example of a non-volatile storage unit for storing and saving programs and data which make the CPU 31 execute a print process to be described later. The hard disk 35 also comprises an area for saving the data of externally submitted print jobs. The programs and data on the HD 35 are read out onto the RAM 33 by the CPU 31 as needed. The RAM 33 has an area for temporarily storing the programs and data read out from the ROM 34 and HD 35 by the CPU 31, and a work area which is used by the CPU 31 to execute various processes. The interface unit 37 connects the control unit 12 to the client device 21 and to the printing system 1. The network unit 36 connects the control unit 12 to the network N and is designed to provide communication with workstations and with other devices reachable via the network N. Print job data contains image data to be printed (i.e. fonts, graphics, rasterized images that describe the content of the document to be printed, described in a Page Description Language or the like), image processing attributes and print settings.

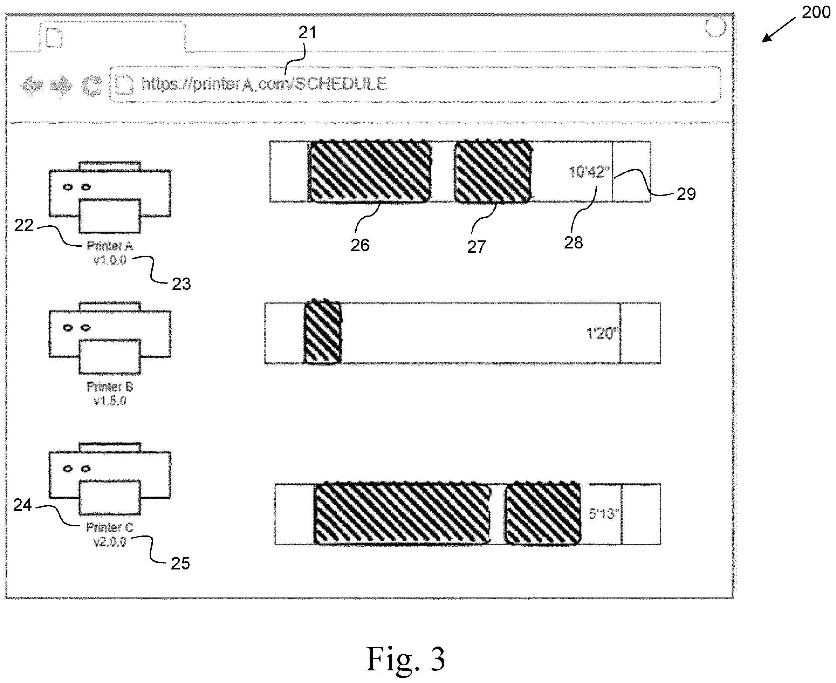

Fig. 3 shows a window 200 on the user interface screen of a remote device or a local user interface according to the invention.

The window 200 has a top entry field 21 for entering a uniform resource locator (URL) to access a desired printer. In this example, the URL of a printer A has been selected and entered in the top entry field 21.

The remote manager of printer A is activated and shows a multi-printer schedule comprising the printers which belong to the one cluster of printers of a print fleet system according to the invention. The one cluster shown if the cluster to which printer A belongs. The cluster comprises three printers A, B, C as shown by printer images on the left side of the window 200.

On the right side of each printer a corresponding print job queue representation in row areas representing a time frame for printing print jobs on the respective printer. For example, for printer A - indicated by reference number 22 - two print jobs 26, 27 are scheduled and a time indication 28 show a time amount from now that the printing of a next job will start. For example, for printer A there are 10 minutes and 42 seconds from now left before the printing of print job 27 will start. The moment in time "now" is indicated by the vertical bar 29.

In the example in Fig. 3 the printers A, B, C in the cluster have installed remote print manager modules which have different software versions. Printer A has a remote print manager installed which has a software version v1.0.0 as indicated by reference sign 23. Printer B has a remote print manager installed which has a software version v1.5.0. Printer C - referenced by reference number 24 - has a remote print manager installed which has a software version v2.0.0. as indicated by reference sign 25.

In Fig. 3 the operator has opened the remote manager application that is configured to handle a cluster of printers via the URL for printer A. Automatically the remote manager queries the printers A, B, C in the cluster for the remote manager version that is embedded/linked in the printer controller of the respective printers A, B, C. Since the software version v2.0.0 of the remote manager in printer C is the highest in the cluster, at least newer than the version v1.0.0 of the remote manager of printer A.

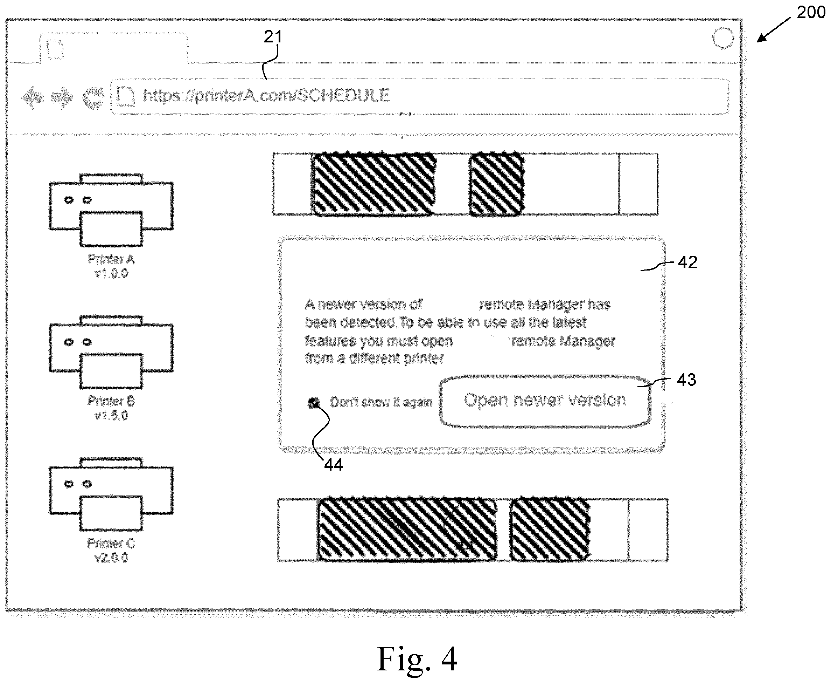

Fig 4. shows optional visual feedback to the user is shown when a preferred version is available on at least one of the printers, in this example on printer C. Even the remote manager of printer B may be sufficient to provide the additionally wanted functionality if the software version v1.5.0 of the printer B already contains said additionally wanted functionality. The visual feedback may be a popup message 42 as shown in Fig. 4. A means 43 is provided for switching to the remote manager of printer C. The means 43 may be a push button or any other user interactive means. If the operator is used to the visual feedback he may check the check box 44 in order to let the print controller not show the visual feedback 42, but instead automatically switch to the URL of a printer having a remote manager with a higher software version.

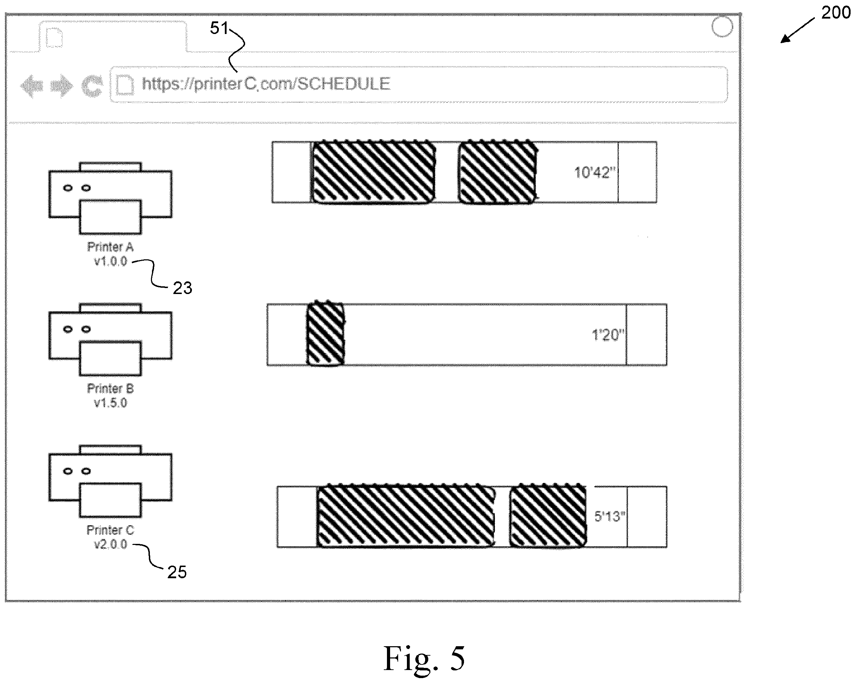

Fig. 5 shows the result of activating the means 43 in Fig. 4. The URL 51 shown in the top entry field addresses now printer C with the higher version v2.0.0 of the remote manager module. It is noticed that the versions of the remote managers of the printers A, B, C are not changed, only the URL is changed. By doing so, the operator does not loose time to install newer versions of the remote manager on a printer with an older version.

It is noticed that the step of switching to another remote manager can be done in two ways.

It can be done in a first way on the initiative of user, for example via means 43 in Fig. 4. The user does not have to configure the new remote manager to use the same configuration from the previously used device.

It can be done in a second way, automatically by the remote manager application. In the latter case the user does not have to search manually and get the newer version. According to a further embodiment parameters of the current remote manager, for example the remote manager of printer A with version v1.0.0, can be sent to the new chosen remote manager, for example the remote manager of printer C with version v2.0.0 for information and configuration purposes. The sending of the parameters may be established via URL link parameters. A URL parameter is meant to pass information about a click through its URL. URL parameters may be inserted into URLs so that the URLs track information about a click. URL parameters are for example made of a key and a value separated by an equals sign (=) and joined by an ampersand (&).

In both ways the user gets instantly access to preferred functionality of the remote manager with the desired version.

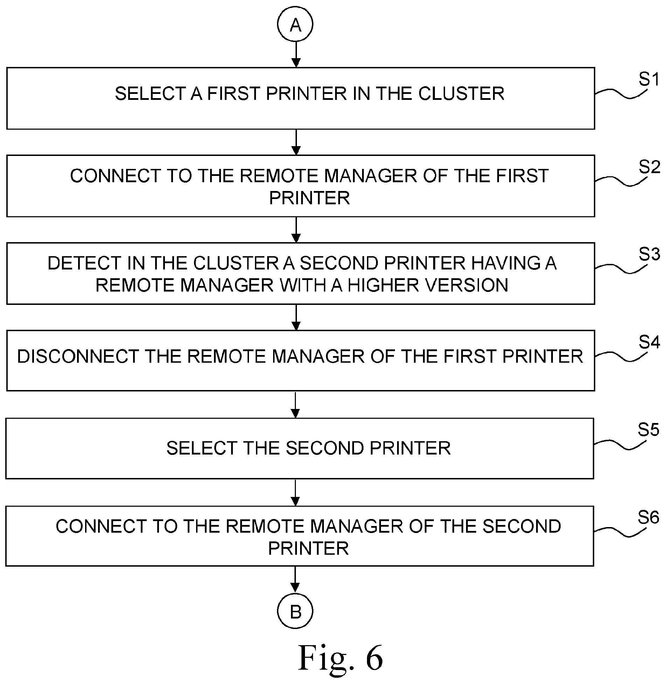

Fig. 6 shows a flow diagram of the method according to the invention. The method is used for a cluster of printers in a print fleet system comprising at least one user interface screen. The remote print manager module is (remotely) used and installed on each printer of the cluster of printers and is configured to display printer data and job data of each printer in the cluster in a window of a web browser.

A starting point A in Fig. 6 leads to a first step S1.

In the first step S1 a first printer in the cluster is selected by means of the web browser. In a second step S2 a connection is made to the remote print manager module of the first printer in the cluster.

In a third step S3 a remote print manager module of a second printer in the cluster is detected which module has a higher software version than the remote print manager module of the first printer. The detection may be done by the remote print manager module of the first printer.

In a fourth step S4 the remote print manager module of the first printer is disconnected. In a fifth step S5 the second printer in the cluster is selected by means of the web browser. The fifth step S5 may be done automatically or via user means on the at least one user interface screen.

In a sixth step S6 a connection is made to the remote print manager module of the second printer.

The method ends in end point B.

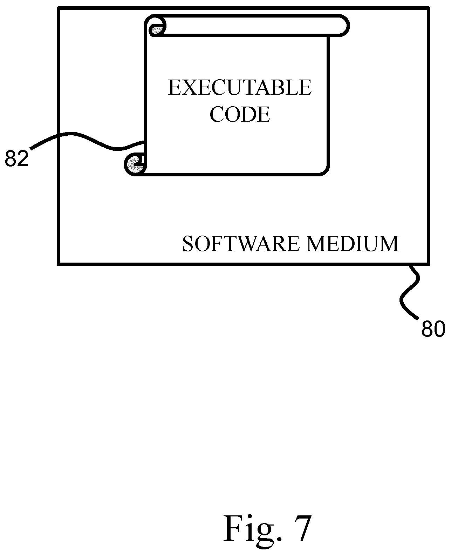

FIG. 7 schematically shows a non-transitory software medium 80 according to the invention. The software medium 80 comprises executable code 82 configured to, when executed, perform the method according to the invention, e.g. as described with respect to either the printing systems shown in Fig. 1 or the method of using the remote manager modules according to the present invention shown in Figs. 3, 4, 5 and/or according to any of the variants and modifications of the printing systems and/or of the method described hereinbefore.

The non-transitory software medium 80 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

The skilled person will recognise that other embodiments are possible within the scope of the appended claims.

## Claims

1. Method of remotely using a remote print manager module which is installed on each printer of a cluster of printers and is configured to display printer data and job data of each printer in the cluster in a window of a web browser, the method comprising the computer-implemented steps of
a) selecting a first printer in the cluster by means of the web browser,
b) connecting to the remote print manager module of the first printer in the cluster,
the method **characterised in** the computer-implemented steps of
c) detecting a remote print manager module of a second printer in the cluster which module has a higher software version than the remote print manager module of the first printer, and
d) disconnecting from the remote print manager module of the first printer,
e) selecting the second printer in the cluster by means of the web browser, and
f) connecting to the remote print manager module of the second printer.

2. Method according to claim 1, wherein step c) of detecting the second printer is performed by the remote print manager module of the first printer.

3. Method according to claim 1, wherein step c) of detecting the second printer is performed by the web browser.

4. Method according to any of the preceding claims, wherein the method comprises the step of the remote print manager module of the first printer giving visual feedback on the window of the web browser to confirm the selection of the second printer.

5. Method according to any of the preceding claims, wherein the printer data and job data comprise a multi-printer schedule of print jobs of the printers in the cluster.

6. Print fleet system comprising a cluster of printers, each printer in the cluster comprising a remote print manager configured to display printer data and job data of each printer in the cluster of printers in a window of a web browser, wherein each printer in the cluster is configured to perform the computer-implemented steps of the method according to any of the claims 1 - 5.

7. Recording medium comprising computer executable program code configured to instruct a computer connected to a print fleet system according to claim 6 to perform the computer-implemented steps of the method according to any of the claims 1 - 5.

## Patentansprüche

1. Verfahren zur Fernnutzung eines Remote-Druckmanager-Moduls, das auf jedem Drucker eines Druckerclusters installiert und so konfiguriert ist, dass es Druckerdaten und Auftragsdaten jedes Druckers im Cluster in einem Fenster eines Webbrowsers anzeigt, wobei das Verfahren die computerimplementierten Schritte umfasst:
a) Auswählen eines ersten Druckers im Cluster mittels des Webbrowsers,
b) Herstellen einer Verbindung zum Remote-Druckmanager-Modul des ersten Druckers im Cluster, wobei das Verfahren durch die computerimplementierten Schritte gekennzeichnet ist
c) Erkennen eines Remote-Druckmanager-Moduls eines zweiten Druckers im Cluster, wobei dieses Modul eine höhere Softwareversion aufweist als das Remote-Druckmanager-Modul des ersten Druckers, und
d) Trennen der Verbindung zum Remote-Druckmanager-Modul des ersten Druckers,
e) Auswählen des zweiten Druckers im Cluster mittels des Webbrowsers und
f) Herstellen einer Verbindung zum Remote-Druckmanager-Modul des zweiten Druckers.

2. Verfahren nach Anspruch 1, wobei Schritt c) des Erkennens des zweiten Druckers durch das Remote-Druckmanager-Modul des ersten Druckers durchgeführt wird.

3. Verfahren nach Anspruch 1, wobei der Schritt c) des Erkennens des zweiten Druckers durch den Webbrowser durchgeführt wird.

4. Verfahren nach einem der vorstehenden Patentansprüche, wobei das Verfahren den Schritt umfasst, dass das Remote-Druckmanager-Modul des ersten Druckers im Fenster des Webbrowsers eine visuelle Rückmeldung gibt, um die Auswahl des zweiten Druckers zu bestätigen.

5. Verfahren nach einem der vorstehenden Patentansprüche, wobei die Druckerdaten und Auftragsdaten einen Mehrfachdrucker-Zeitplan für Druckaufträge der Drucker im Cluster umfassen.

6. Druckerflottensystem, das einen Cluster von Druckern umfasst, wobei jeder Drucker im Cluster einen Remote-Druckmanager umfasst, der so konfiguriert ist, dass er Druckerdaten und Auftragsdaten jedes Druckers im Cluster von Druckern in einem Fenster eines Webbrowsers anzeigt, wobei jeder Drucker im Cluster so konfiguriert ist, dass er die computerimplementierten Schritte des Verfahrens gemäß einem der Patentansprüche 1 bis 5 ausführt.

7. Aufzeichnungsmedium, das einen computerausführbaren Programmcode umfasst, der so konfiguriert ist, dass er einen mit einem Druckerflottensystem gemäß Patentanspruch 6 verbundenen Computer anweist, die computerimplementierten Schritte des Verfahrens gemäß einem der Patentansprüche 1 bis 5 auszuführen.

## Revendications

1. Procédé d'utilisation à distance d'un module de gestion d'impression à distance qui est installé sur chaque imprimante d'un cluster d'imprimantes et qui est configuré pour afficher les données d'impression et les données de tâche de chaque imprimante du cluster dans une fenêtre d'un navigateur Web, le procédé comprenant les étapes mises en œuvre par ordinateur consistant à
a) sélectionner une première imprimante du cluster à l'aide du navigateur Web,
b) se connecter au module de gestion d'impression à distance de la première imprimante du cluster, le procédé étant **caractérisé par** les étapes mises en œuvre par ordinateur consistant à
c) détecter un module de gestion d'impression à distance d'une deuxième imprimante du cluster, lequel module possède une version logicielle supérieure à celle du module de gestion d'impression à distance de la première imprimante, et
d) se déconnecter du module de gestion d'impression à distance de la première imprimante,
e) sélectionner la deuxième imprimante du cluster à l'aide du navigateur Web, et
f) se connecter au module de gestion d'impression à distance de la deuxième imprimante.

2. Procédé selon la revendication 1, dans lequel l'étape c) consistant à détecter la deuxième imprimante est effectuée par le module de gestion d'impression à distance de la première imprimante.

3. Procédé selon la revendication 1, dans lequel l'étape c) consistant à détecter la deuxième imprimante est effectuée par le navigateur Web.

4. Procédé selon l'une quelconque des revendications précédentes, dans lequel le procédé comprend l'étape consistant pour le module de gestion d'impression à distance de la première imprimante à fournir un retour visuel dans la fenêtre du navigateur Web afin de confirmer la sélection de la deuxième imprimante.

5. Procédé selon l'une quelconque des revendications précédentes, dans lequel les données d'imprimante et les données de tâche comprennent un planning multiimprimantes des tâches d'impression des imprimantes du cluster.

6. Système de parc d'imprimantes comprenant un cluster d'imprimantes, chaque imprimante du cluster comprenant un gestionnaire d'impression à distance configuré pour afficher les données d'imprimante et les données de tâche de chaque imprimante du cluster d'imprimantes dans une fenêtre d'un navigateur Web, dans lequel chaque imprimante du cluster est configurée pour exécuter les étapes mises en œuvre par ordinateur du procédé selon l'une quelconque des revendications 1 à 5.

7. Support d'enregistrement comprenant un code de programme exécutable par ordinateur configuré pour ordonner à un ordinateur connecté à un système de parc d'imprimantes selon la revendication 6 d'exécuter les étapes mises en œuvre par ordinateur du procédé selon l'une quelconque des revendications 1 à 5.
